Europäisches Patentamt

European Patent Office

Office européen des brevets

(19)

(11) EP 1 267 432 A2

(12) EUROPEAN PATENT APPLICATION

(43) Date of publication:
18.12.2002 Bulletin 2002/51

(51) Int Cl.⁷: H01M 8/00, H01M 8/06,
F17C 7/02, F17C 7/04,
B01D 53/62, C10K 3/04

(21) Application number: 02254177.5

(22) Date of filing: 17.06.2002

(84) Designated Contracting States:
AT BE CH CY DE DK ES FI FR GB GR IE IT LI LU
MC NL PT SE TR
Designated Extension States:
AL LT LV MK RO SI

(30) Priority: 15.06.2001 US 298476 P

(71) Applicant: Chart, Inc.
Burnsville, MN 55306-3803 (US)

(72) Inventor: The designation of the inventor has not
yet been filed

(74) Representative: Allman, Peter John et al
MARKS & CLERK,
Sussex House,
83-85 Mosley Street
Manchester M2 3LG (GB)

(54) Fuel cell refueling station and system

(57) A station for dispensing liquid natural gas (LNG) and hydrogen to vehicles features a bulk tank which receives LNG from a tanker truck. LNG from the bulk tank may be directed to either an LNG conditioning and dispensing portion of the station or a hydrogen production and dispensing portion of the station. The latter includes a heat exchanger for warming the LNG and a steam reformer which produces hydrogen and carbon dioxide from the warmed LNG. The hydrogen is compressed and then either stored or dispensed to a vehicle powered by a fuel cell. The carbon dioxide may optionally be further processed and stored for future use.

FIG. 2

EP 1 267 432 A2

## Description

CROSS REFERENCE TO RELATED APPLICATIONS

This application claims priority from U.S. Provisional Patent Application Serial No. 60/298,476, filed June 15, 2001.

BACKGROUND OF THE INVENTION

The present invention relates generally to fuel cell refueling stations, more particularly, to liquid natural gas dispensing stations that are modified to additionally provide hydrogen to fuel cell vehicles.

In order to protect the environment and air from harmful chemicals, the government has set maximum allowable harmful fuel emissions for vehicles in the United States. These requirements are forcing vehicle manufacturers to design vehicles that run on fuels other than gasoline and diesel fuel or consider alternative types of engines, such as electric engines. This has led to the design of vehicles that use fuel cells that run on pure hydrogen. When pure hydrogen is mixed with oxygen in the vehicle, water, heat and electricity are produced, ideally without emitting other chemicals that are harmful to the air or the environment.

Fuel cell technology is so promising that a public-private partnership between the U.S. Department of Energy (DOE) and the nation's major automakers was recently formed to promote the development of hydrogen as a primary fuel for cars and trucks. The new parnership/program, called FeedomCAR (CAR stands for Cooperative Automotive Research). includes Ford, General Motors and DaimlerChrysler and focuses on technologies to enable mass production of affordable, hydrogen-powered fuel cell vehicles and the hydrogen supply infrastructure to support them.

While fuel cell vehicles are already being tested and used, a standard infrastructure that efficiently provides fuel for these vehicles throughout the country has not been developed yet. Hydrogen is not found naturally and must be separated or stripped from a source chemical to obtain pure hydrogen. However, no general agreement exists as to which,source chemical to use to obtain hydrogen. A number of different source chemicals are known, including natural gas (methane or $CH_4$), methanol, ethanol and even diesel fuel and gasoline.

The expense of building the infrastructure depends heavily on which source chemical is used. The easiest way to build an infrastructure would be to modify the substantial existing gasoline and diesel fuel infrastructure to provide hydrogen. Existing facilities could be fitted with devices for converting gasoline or diesel fuel to hydrogen. The fuel cell vehicles could then refuel at existing gas stations. Gasoline and diesel fuel, however, are very inefficient sources, providing merely 50% hydrogen for every pound of gasoline or diesel fuel. In addition, converting these fuels and purifying the hydrogen requires special low sulfuric chemicals, adding to the cost of the conversion.

Additionally, no consensus exists as to when to convert the source chemical into hydrogen along the process of supplying the hydrogen fuel. Hydrogen can be converted and purified at a plant and then supplied to the refueling stations ("upstream" conversion). However, supplying hydrogen to the refueling station can result in very high shipping costs because pure hydrogen is less dense or takes up more volume than hydrogen still bonded within the source chemicals. In other words, a tanker truck full of a source chemical will typically provide substantially more hydrogen than a tanker truck full of liquid hydrogen by itself.

The hydrogen could also be produced by supplying the source chemical to the vehicle and providing mini plants on the vehicles for converting the source chemical to hydrogen on the vehicles ("downstream" conversion). This configuration, however, requires a reformer that strips the hydrogen from the source chemical on each vehicle. The size restrictions on the reformer and the complexity of the design of the vehicle to implement this will drive the cost of the vehicle to unreasonable levels.

Due to these considerations, the DOE has recently indicated that it would cast its investment on promoting a hydrogen infrastructure based on steam reformation at the service station as opposed to fuel cell vehicles powered by hydrogen reformed onboard the vehicle.

The DOE has also indicated that the hydrogen infrastructure will likely be built around steam reformation of natural gas at fueling stations. Natural gas is attractive because it has the highest carbon-to-hydrogen ratio of any hydrocarbon. In other words, reformation of natural gas gives you more of what you want (hydrogen) with less of what you don't want (carbon). In addition, natural gas contains few contaminants and reforming it is a cost effective and established technology. Because of this, the majority of commercial hydrogen used in the U.S. today is produced by reforming natural gas and virtually every commercially operating fuel cell in the world is powered by hydrogen produced by natural gas.

The U.S. has over 1.3 million miles of transmission and distribution lines carrying natural gas to almost every part of the country. As a result, the focus on natural gas reformation has been on stations that receive natural gas from pipelines. For example, The Sun-Line Transit Agency in Thousand Palms, California has constructed a fueling station for buses equipped with fuel cell engines. The station obtains natural gas from a preexisting natural gas pipeline network, reforms it into hydrogen gas, compresses the hydrogen gas and dispenses the compressed hydrogen gas into storage tanks onboard a bus.

There are disadvantages, however, in relying on a pipeline to provide natural gas to the station. For example, a station that does not require access to a natural gas pipeline offers more flexibility with regard to location. In addition, there is significant additional cost and maintenance associated with the plumbing and equipment necessary to connect the station to the natural gas pipeline. Furthermore, a disruption in piping the natural gas to the station, such as due to a pipe leak or other problem, would interrupt the fueling capability of the station.

Liquid natural gas (LNG) dispensing stations exist for supplying natural gas for dispensing a diesel/natural gas mixture or natural gas by itself that reduces harmful emissions from trucks with modified combustion engines. The conventional LNG dispensing station generally has a bulk storage tank that receives LNG from a tanker truck. The bulk storage tank is connected to a pump in a sump, which in turn is connected to a dispensing device as known in the art. These known systems, however, do not provide a way of supplying pure hydrogen or converting LNG to hydrogen.

Accordingly, a main object of the present invention is to provide an infrastructure that converts a source chemical to pure hydrogen at a point, and with a source material, that reduces shipping costs and the cost to provide refueling stations in order to fuel vehicles.

It is another object of the present invention to provide a relatively simple and inexpensive infrastructure with refueling stations that provide a source chemical that converts to pure hydrogen at an efficient high rate while substantially reducing waste material.

SUMMARY OF THE INVENTION

The present invention is directed to a system for producing hydrogen and fueling vehicles which use hydrogen to produce power via fuel cells. The system includes a centralized liquid natural gas production facility from which a tanker truck receives LNG. The tanker truck delivers the LNG to a refueling station that includes a bulk tank containing a supply of the LNG. Means may exist for the refueling station to contact the centralized liquid natural gas production facility so that LNG may automatically be reordered and dispatched. The refueling station has the capability to condition and dispense the LNG from the bulk tank to a use device such as an LNG-powered vehicle.

A heat exchanger is also in communication with the bulk tank and receives LNG from the bulk tank so as to warm it. The warmed LNG is directed to a steam reformer where hydrogen gas and carbon dioxide are produced. The hydrogen is then compressed in a compressor and either dispensed to the vehicle or stored. $CO_2$ from the reformer may be filtered out and exhausted.

In an alternative embodiment, $CO_2$ from the reformer is directed to the heat exchanger of the refueling station and then a storage container so that the $CO_2$ is cooled by the liquid natural gas flowing through the heat exchanger and liquid $CO_2$ is formed in the heat exchanger and stored in the storage container for future use. A compressor is in circuit between the reformer and the heat exchanger so that the $CO_2$ from the reformer is compressed prior to entering the heat exchanger.

In another alternative embodiment, hydrogen gas from the refueling station reformer is routed to the refueling station heat exchanger and cooled by the LNG flowing therethrough prior to traveling to the dispenser. A compressor is in circuit between the heat exchanger and the dispenser so that the hydrogen is compressed after leaving the heat exchanger and before traveling to the dispenser. As an alternative to the compressor, a liquifier may be placed in circuit between the heat exchanger and the dispenser so that the hydrogen is liquified after leaving the heat exchanger and before traveling to the dispenser.

BRIEF DESCRIPTION OF THE DRAWINGS

FIG. 1 is an illustration primarily in block diagram form showing an embodiment of the fuel cell refueling station and system of the present invention;

FIG. 2 is a schematic drawing of a first embodiment of the fuel cell refueling station of the present invention;

FIG. 3 is a schematic drawing of a second embodiment of the fuel cell refueling station of the present invention;

FIG. 4 is a schematic drawing of a third embodiment of the fuel cell refueling station of the present invention; and

FIG. 5 is a schematic drawing of a fourth embodiment of the fuel cell refueling station of the present invention.

DESCRIPTION OF THE PREFERRED EMBODIMENTS

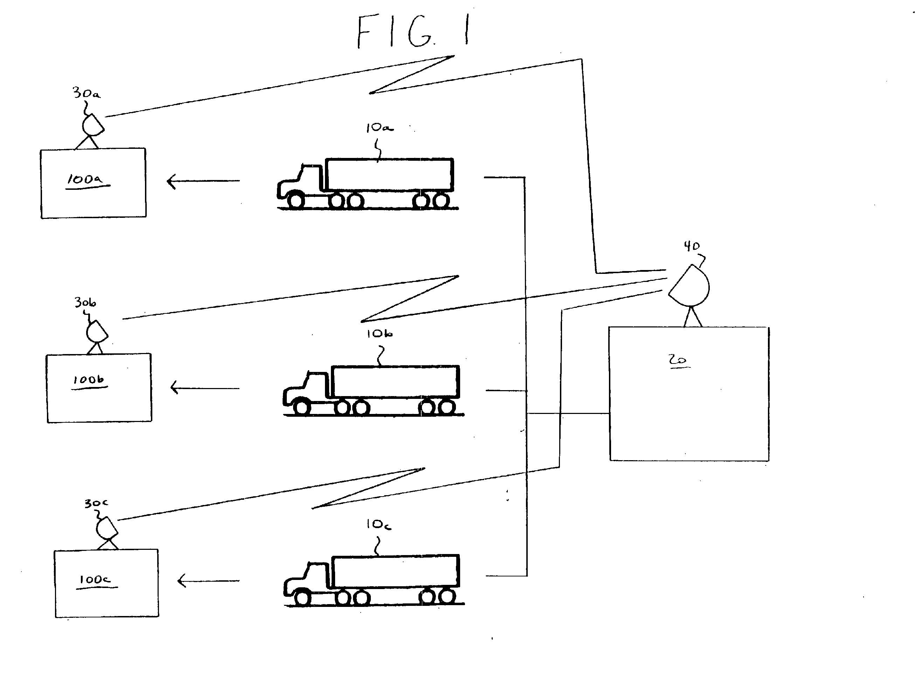

As illustrated in FIG. 1, in accordance with the present invention, tanker trucks 10a, 10b and 10c are filled with liquid natural gas (LNG) at a centralized LNG production facility 20. The LNG tanker trucks are then dispatched to refueling stations 100a, 100b and 100c so that the LNG bulk tanks at the stations may be refilled. The refueling stations 100a, 100b and 100c may optionally include transmitters that communicate via refueling station antennas 30a, 30b and 30c and an LNG facility antenna 40 with a receiver at the LNG facility 20 so that the LNG tanker trucks may be automatically and timely dispatched so that the refueling stations may provide uninterrupted service. As an alternative to the antennas 30a, 30b, 30c and 40, the automatic dispatching system may be landline-based.

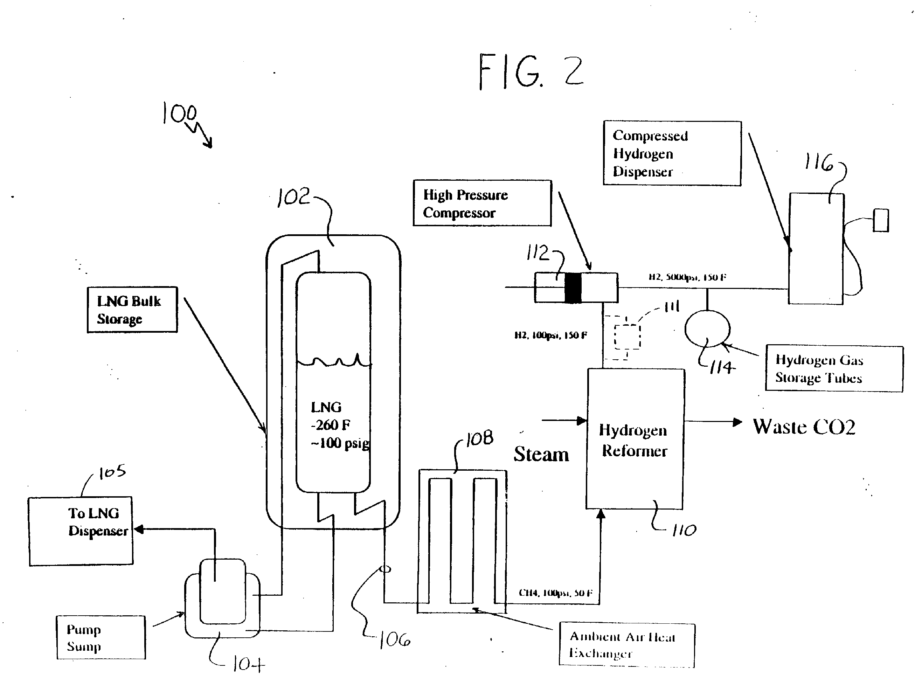

Referring to FIG. 2, in an embodiment of the present invention, a hydrogen refueling station 100 is built by retrofitting hydrogen processing components onto an already existing LNG dispensing station. The hydrogen refueling station has a bulk cryogenic storage tank 102 for storing liquid natural gas (LNG) typically at -260°F and approximately 100 psig as known in the art. As described with regard to FIG. 1, the bulk tank 102 is refilled by a tanker truck dispatched from a centralized LNG production facility.

The bulk tank 102 is connected to a pump in a sump 104, which in turn is connected to an LNG conditioning and dispensing portion of the station 105. Examples of LNG conditioning and dispensing systems that are suitable for use as the LNG conditioning and dispensing portion 105 of the station 100 are presented in commonly assigned U.S. Patent No. 6,354,088 to Emmer et al., U.S. Patent Nos. 5,421,160 and 5,537,824, both to Gustafson et al., U.S. Patent Nos. 5,121,609 and 5,231,838, both to Cieslukowski and U.S. Patent No. 5,228,295 to Gustafson. In addition, the dispensing portion may take the form of currently pending and commonly owned U.S. Patent Application No. 09/632,088.

To implement hydrogen dispensing, the refueling station 100 has a supply line 106 connected to the bulk storage tank 102 that supplies LNG to an ambient air heat exchanger 108 where the temperature of the LNG is raised to 50°F. The warmed LNG is then routed to a hydrogen reformer 110 where the LNG is preferably mixed with steam. While hydrogen reformer 110 is discussed below in terms of a steam reformer, it is to be understood that alternative types of reformers that produce hydrogen from natural gas may be used without departing from the scope of the present invention.

Reformer 110 produced hydrogen, and waste carbon dioxide, from the inputs of LNG and steam in the presence of a catalyst in accordance with the following endothermic reaction:

$$CH_4 + 2H_2O \rightarrow CO_2 + 4H_2$$

In the reformer, the mixture of LNG and steam is passed through a catalytic bed which is typically heated to a reforming temperature of about 1,250°F to about 1,600°F. Catalysts typically used are nickel catalysts which are deposited on alumina pellets.

The reformer 110 may be a tubular reformer or a plate-type reformer, both of which are well known in the art. Examples of tubular reformers are presented in U.S. Patent Nos. 4,810,485 to Marianowski et al., 4,838,897 to Amano et al. and 3,698,957 to Sanderson. Examples of plate-type reformers are presented in U.S. Patent Nos. 5,997,594 to Edlund et al. and 6,033,634 to Koga. In addition, reformers suitable for use in the station may be obtained from GTI/Mosaic Energy of Des Plaines, Illinois.

The reformer 110 thus produces hydrogen gas at approximately 150°F in addition to waste carbon dioxide gas. The waste carbon dioxide is filtered out and exhausted.

Depending on the device selected for use as reformed 110, the hydrogen may require further filtration/purification as it could be contaminated with materials that would be detrimental to the electrical chemical reaction that occurs within the fuel cell onboard the vehicle being refueled. More specifically, some trace quantities of unreacted reactants and trace quantities of byproducts such as CO may result from steam reforming. Trace quantities of CO, certain concentrations of $CO_2$ and, in some cases, unsaturated hydrocarbons and alcohols will poison a fuel cell.

As a result, the system 100 may optionally be provided with a purifier, indicated in phantom at 111. As is well known in the art, purifier 111 may include a pressure swing adsorption (PSA) stack arrangement. Alternatively, the purifier may use metallic foils or thin films, also well known in the art.

The hydrogen gas flows to a high pressure compressor 112 which raises the pressure of the hydrogen gas to 5000 psi. The pressurized hydrogen is either stored in gas storage tubes 114 or flows to a dispenser 116. A vehicle (not shown) can be connected to the dispenser 116 for receiving a supply of high pressure hydrogen gas.

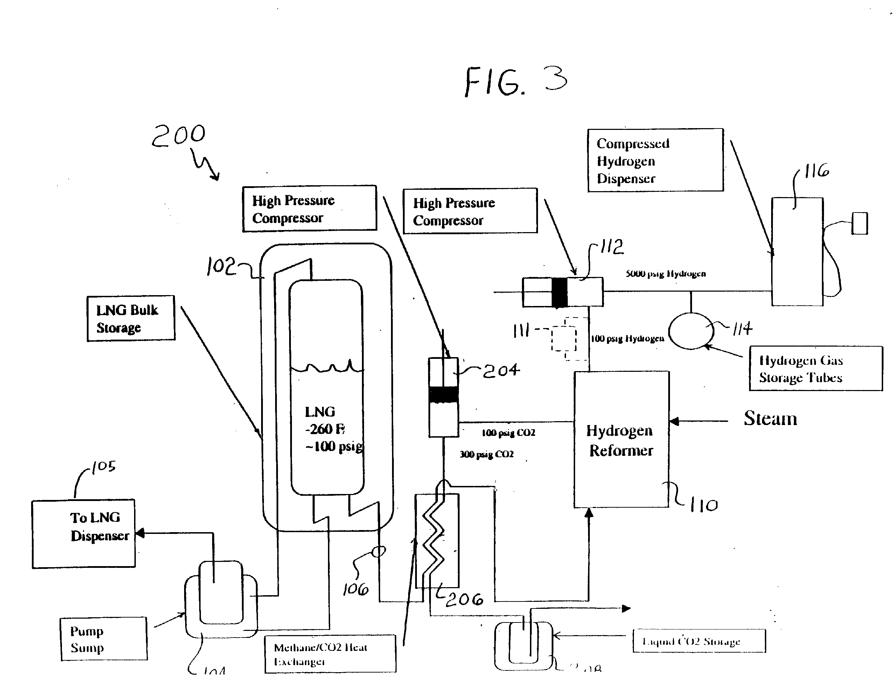

Referring to FIG. 3, an alternative embodiment refueling station 200 is shown with features similar to the features of refueling station 100 numbered the same. In this alternative, instead of exhausting the carbon dioxide into the atmosphere or waste removal devices, liquid $CO_2$ is produced which can be used for dry ice, beverage production or any other known $CO_2$ application. To provide the liquid $CO_2$, the carbon dioxide produced at a reformer 110 is routed to a compressor 204 and is compressed from 100 psig to 300 psig. The pressurized $CO_2$ is then routed back to a heat exchanger 206 that uses the heat from the $CO_2$ to warm the LNG first flowing toward the reformer 110. The exchanger 206 also cools the $CO_2$ to below its critical temperature, at approximately 90°F, which converts it into liquid before it is stored in a dewar 208 for later dispensing.

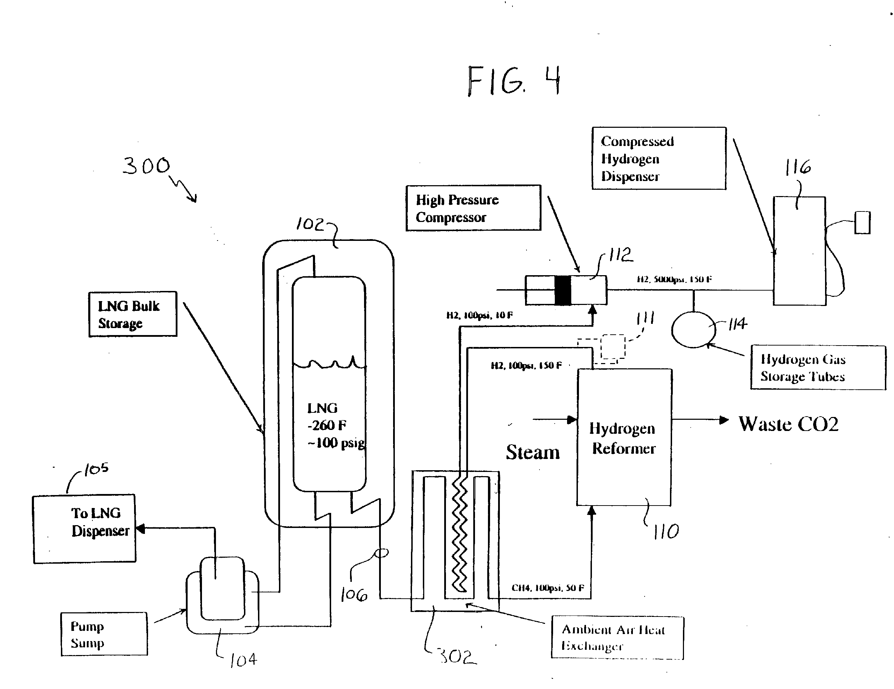

Referring to FIG. 4, in another alternative embodiment, refueling station 300 is a high efficiency station that routes the purified hydrogen from the reformer 110 back to a heat exchanger 302. At the exchanger 302, the heat from the hydrogen is used to heat the natural gas before it enters the reformer 110. The cooled hydrogen then is routed to the high pressure compressor 112 as with refueling station 100.

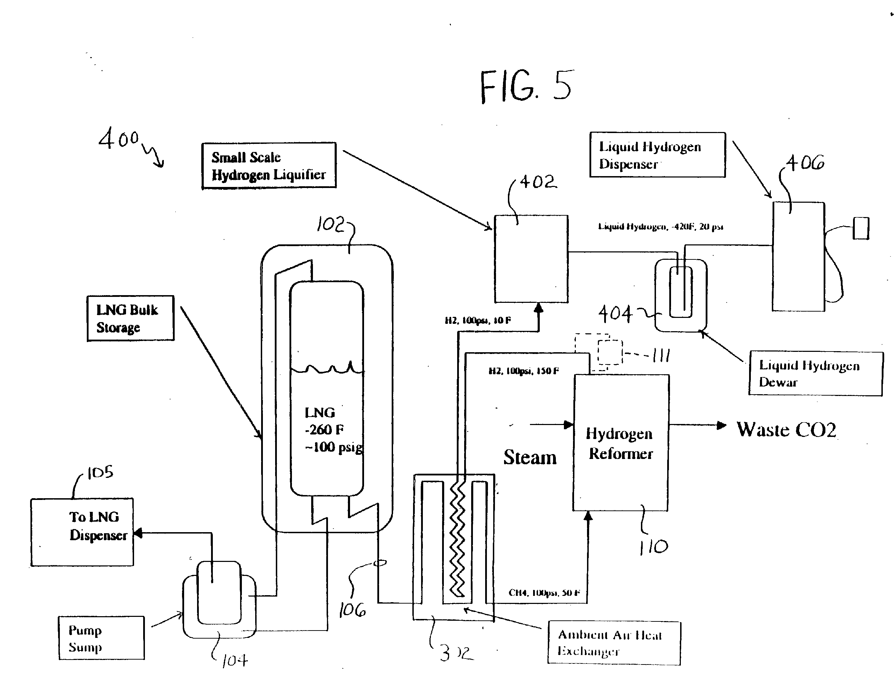

Referring to FIG. 5, a refueling station 400 cools the hydrogen in a heat exchanger 302 as with refueling station 300, except that the cooled hydrogen then proceeds to a small scale hydrogen liquifier 402. The liquifier 402 further cools the hydrogen to -420°F and lowers the pressure to 20 psi. Such liquifiers are well known in the art. A dewar 404 for the liquid hydrogen is then used to store the hydrogen and keep it cool. The hydrogen then flows to a liquid hydrogen dispenser 406 for filling a vehicle (not shown) as needed.

It will be appreciated that many other configurations of LNG dispensing stations can be retrofitted or built new with a reformer and dispensing mechanisms to provide pure hydrogen. It will also be appreciated that any reformer or conversion device that strips pure hydrogen by cracking natural gas or methane can be used by the refueling station of the present invention to provide the hydrogen.

The present invention thus offers a number of advantages over the prior art. First, the cost to add on a hydrogen production and dispensing equipment to the existing and growing infrastructure supplying bulk LNG is relatively low. Besides cost, relatively few significant physical restrictions are placed on the reformer at a refueling station, especially compared to a reformer placed onboard a vehicle. Also, for the same size tanker truck, transportation of LNG to the refueling station provides substantially more hydrogen than transporting previously purified liquid hydrogen (approximately one truck of LNG carries the same amount of hydrogen as three trucks of pure liquid hydrogen). Additionally, natural gas is 98% efficient when stripping hydrogen from natural gas leaving very little $CO_2$ waste compared to methanol that is only 85% efficient. LNG is also relatively safer than the other possible source chemicals because of its high ignition energy.

While the preferred embodiments of the invention have been shown and described, it will be apparent to those skilled in the art that changes and modifications may be made therein without departing from the spirit of the invention, the scope of which is defined by the appended claims.

## Claims

1. A system for producing hydrogen and fueling vehicles which use hydrogen to produce power comprising:

   a. a bulk tank containing a supply of liquid natural gas;
   b. a heat exchanger in communication with the bulk tank, said heat exchanger receiving liquid natural gas from said bulk tank and warming it;
   c. a reformer in communication with the heat exchanger, said reformer receiving the warmed liquid natural gas from said heat exchanger and producing hydrogen gas therefrom; and
   d. a dispenser in communication with said reformer and adapted to dispense hydrogen produced by said reformer to the vehicles.

2. The system of claim 1 further comprising a compressor in circuit between said reformer and said dispenser so that hydrogen gas from the reformer may be pressurized.

3. The system of claim 2 further comprising gas storage tubes in circuit between said compressor and said dispenser so that pressurized hydrogen gas from the compressor may be stored.

4. The system of claim 2 further comprising a purifier in circuit between said reformer and said compressor.

5. The system of claim 1 further comprising a pump in communication with the bulk tank so that liquid natural gas from the bulk tank may be pumped to a use device.

6. The system of claim 5 further comprising a sump with said pump positioned therein, said sump in communication with the bulk tank and receiving liquid natural gas therefrom so that the pump is at least partially submerged in the liquid natural gas.

7. The system of claim 1 further comprising a liquid natural gas dispensing and conditioning portion in communication with the bulk tank so that liquid natural gas from the bulk tank may be conditioned and dispensed to a use device.

8. The system of claim 1 wherein said reformer is a steam reformer and carbon dioxide is produced along with the hydrogen.

9. The system of claim 8 wherein carbon dioxide from the reformer is directed to the heat exchanger and then a storage container so that the carbon dioxide is cooled by the liquid natural gas flowing through the heat exchanger and liquid carbon dioxide is formed in the heat exchanger and stored in the storage container for future use.

10. The system of claim 9 further comprising a compressor in circuit between the reformer and the heat exchanger so that the carbon dioxide from the reformer is compressed prior to entering said heat exchanger.

11. The system of claim 1 wherein hydrogen gas from the reformer is routed to the heat exchanger and cooled by the liquid natural gas flowing therethrough prior to traveling to the dispenser.

12. The system of claim 11 further comprising a compressor in circuit between the heat exchanger and the dispenser so that the hydrogen is compressed after leaving the heat exchanger and before traveling to the dispenser.

13. The system of claim 12 further comprising gas storage tubes in circuit between said compressor and said dispenser so that pressurized gas from the compressor may be stored.

14. The system of claim 11 further comprising a liquifier in circuit between the heat exchanger and the dispenser so that the hydrogen is liquified after leaving the heat exchanger and before traveling to the dispenser.

15. The system of claim 14 further comprising a liquid hydrogen dewar in circuit between the liquifier and the dispenser so that liquid hydrogen from the liquifier may be stored.

16. A system for producing and fueling vehicles which use hydrogen to produce power comprising:

    a. a centralized liquid natural gas production facility;
    b. a tanker truck receiving liquid natural gas from said production facility; and
    c. a refueling station including:

        i) a bulk tank adapted to communicate with said tanker truck and containing a supply of liquid natural gas from said tanker truck;
        ii) a heat exchanger in communication with the bulk tank, said heat exchanger receiving liquid natural gas from said bulk tank and warming it;
        iii) a reformer in communication with the heat exchanger, said reformer receiving the warmed liquid natural gas from said heat exchanger and producing hydrogen therefrom; and
        iv) a dispenser in communication with said reformer and adapted to dispense hydrogen produced by said reformer to the vehicles.

17. The system of claim 16 wherein the refueling station further includes a liquid natural gas dispensing and conditioning portion in communication with the bulk tank so that liquid natural gas from the bulk tank may be conditioned and dispensed to a use device.

18. The system of claim 16 wherein the reformer of said refueling station is a steam reformer and carbon dioxide is produced along with the hydrogen.

19. The system of claim 18 wherein carbon dioxide from the reformer is directed to the heat exchanger of the refueling station and then a storage container so that the carbon dioxide is cooled by the liquid natural gas flowing through the heat exchanger and liquid carbon dioxide is formed in the heat exchanger and stored in the storage container for future use.

20. The system of claim 19 further comprising a compressor in circuit between the reformer and the heat exchanger so that the carbon dioxide from the reformer is compressed prior to entering said heat exchanger.

21. The system of claim 16 wherein hydrogen gas from the refueling station reformer is routed to the refueling station heat exchanger and cooled by the liquid natural gas flowing therethrough prior to traveling to the dispenser.

22. The system of claim 21 further comprising a compressor in circuit between the heat exchanger and the dispenser so that the hydrogen is compressed after leaving the heat exchanger and before traveling to the dispenser.

23. The system of claim 21 further comprising a liquifier in circuit between the heat exchanger and the dispenser so that the hydrogen is liquified after leaving the heat exchanger and before traveling to the dispenser.

24. The system of claim 16 further comprising means for the refueling station to contact the centralized liquid natural gas production facility so that liquid natural gas may automatically be reordered and dispatched.

25. A method for fueling vehicles which use hydrogen to produce power comprising the steps of:

    a. storing liquid natural gas;
    b. warming the liquid natural gas;
    c. converting the warmed liquid natural gas to hydrogen gas; and
    d. dispensing the hydrogen to the vehicles.

26. The method of claim 25 further comprising the step of transporting the liquid natural gas before storing it.

27. The method of claim 25 further comprising the step of compressing the hydrogen gas prior to dispensing it to the vehicles.

28. The method of claim 25 further comprising the step of storing the hydrogen gas before dispensing it to the vehicles.

29. The method of claim 25 further comprising the step of liquifying the hydrogen before dispensing it to the vehicles.

**30.** The method of claim 29 further comprising the step of storing the liquid hydrogen before dispensing it to the vehicles.

FIG. 1

EP 1 267 432 A2

# FIG. 2

100

**LNG Bulk Storage**

102

**High Pressure Compressor**

**Compressed Hydrogen Dispenser**

116

112

H2, 5000psi, 150 F

H2, 100psi, 150 F

111

LNG
-260 F
~100 psig

114

**Hydrogen Gas Storage Tubes**

105

**To LNG Dispenser**

108

Steam

**Hydrogen Reformer**

Waste CO2

110

**Pump Sump**

104

106

CH4, 100psi, 50 F

**Ambient Air Heat Exchanger**

EP 1 267 432 A2

FIG. 3

# FIG. 4

300

**LNG Bulk Storage**

102

**LNG**
-260 F
~100 psig

**To LNG Dispenser** — 105

**Pump Sump** — 104

106

302

**High Pressure Compressor**

**Compressed Hydrogen Dispenser**

116

112

H2, 5000psi, 150 F

H2, 100psi, 10 F

114

**Hydrogen Gas Storage Tubes**

111

H2, 100psi, 150 F

**Steam**

**Hydrogen Reformer** → **Waste CO2**

110

CH4, 100psi, 50 F

**Ambient Air Heat Exchanger**

EP 1 267 432 A2

# FIG. 5

400

**Small Scale Hydrogen Liquifier**

**Liquid Hydrogen Dispenser**

402

406

102

Liquid Hydrogen, -420F, 20 psi

**LNG Bulk Storage**

H2, 100psi, 10 F

404

H2, 100psi, 150 F

111

**Liquid Hydrogen Dewar**

**LNG -260 F ~100 psig**

105

Steam

**Hydrogen Reformer**

→ Waste CO2

**To LNG Dispenser**

110

**Pump Sump**

CH4, 100psi, 50 F

104

106

312

**Ambient Air Heat Exchanger**